Europäisches Patentamt

European Patent Office

Office européen des brevets

(11) Veröffentlichungsnummer: **0 475 140 A2**

# EUROPÄISCHE PATENTANMELDUNG

(21) Anmeldenummer: **91114036.6**

(22) Anmeldetag: **22.08.91**

(51) Int. Cl.5: **B29B 13/10**, C08J 3/12, //B29K9:00

(30) Priorität: **12.09.90 DE 4028940**

(43) Veröffentlichungstag der Anmeldung:
**18.03.92 Patentblatt 92/12**

(84) Benannte Vertragsstaaten:
**BE DE ES FR GB IT NL**

(71) Anmelder: **BASF Aktiengesellschaft
Carl-Bosch-Strasse 38
W-6700 Ludwigshafen(DE)**

(72) Erfinder: **Fauth, Karl-Heinz
Haardtblick 7
W-6719 Wattenheim(DE)**
Erfinder: **Martischius, Franz-Dieter, Dr.
Neubergstrasse 73
W-6730 Neustadt(DE)**
Erfinder: **Raab, Bernhard
In den Elf Morgen 2
W-6845 Gross-Rohrheim(DE)**

(54) **Verfahren zum Zerkleinern von Polyisobuten.**

(57) Verfahren zum Zerkleinern von Polyisobuten mit Molmassen von 5.000.000 bis 12.000.000 durch Vermahlen bei Drücken von 1 bis 50 bar und mittleren Verweilzeiten von 0,1 bis 30 Minuten, wobei man das Vermahlen bei Temperaturen von 0 bis 60°C vornimmt.

EP 0 475 140 A2

EP 0 475 140 A2

Die Erfindung betrifft ein Verfahren zum Zerkleinern von Polyisobuten mit Molmassen von 5.000.000 bis 12.000.000 durch Vermahlen bei Drücken von 1 bis 50 bar und mittleren Verweilzeiten von 0,1 bis 30 Minuten.

Die Herstellung von Polyisobuten durch kationische Polymerisation ist bereits mehrfach beschrieben worden (EP-A 206 756, EP-A 265 053, US-A 4 316 973, GB-A 525 542, GB-A 828 367). Dabei wird die Polymerisation durch Borhalogenide, insbesondere durch Bortrichlorid und Bortrifluorid, sowie durch bestimmte Zusätze, beispielsweise durch Carbonsäurederivate, Aminoverbindungen, Chinoline oder Formaldehyde ausgelöst (EP-A 195 333, EP-B 115 635). Die Polymerisation des Isobutens kann so gesteuert werden, daß Polymerisate mit Molmassen von weit mehr als 1.000.000 erhalten werden können (Saechtling "Kunststofftaschenbuch", 23. Ausgabe, Carl-Hanser Verlag, München/Wien, Seite 207 1986]), die u.a. als viskositätsverbessernde Zusätze von Mineralölen oder als Grundstoff für dünne Filme eingesetzt werden können.

Für derartige Anwendungen ist es erforderlich, daß sich das verwendete Polyisobuten gut in flüssigen Kohlenwasserstoffen und Mineralölen löst. Die nach der Polymerisation erhältlichen Polyisobutenpartikel sind im Regelfall jedoch grobkörnig und müssen deshalb, bevor sie in Lösung gebracht werden können, erst zerkleinert werden (EP-B 15 151, Seite 1, Zeile 11-15). In der EP-B 15 151, der US-A 4 510 304 und der PCT-Anmeldung WO 87/03516 sind Verfahren zur Zerkleinerung von Polyisobuten beschrieben, bei denen das Polyisobuten zunächst in einer Flüssigkeit gelöst und anschließend bei sehr tiefen Temperaturen, d.h. zwischen -70 und -190°C, zerkleinert wird. Dieses Verfahren ist jedoch wegen der dabei einzuhaltenden sehr tiefen Temperaturen und der speziellen, dafür erforderlichen Apparaturen technisch sehr aufwendig. Andererseits war nicht bekannt, wie Polymerisate des Isobutens mit solch hohen Molmassen auf anderem Wege zerkleinert werden können.

Der vorliegenden Erfindung lag daher die Aufgabe zugrunde, ein verfahrenstechnisch und apparativ weniger aufwendiges Verfahren zur Zerkleinerung von Polyisobuten zu entwickeln.

Diese Aufgabe wurde durch ein Verfahren zum Zerkleinern von Polyisobuten mit Molmassen von 5.000.000 bis 12.000.000 durch Vermahlen bei Drücken von 1 bis 50 bar und mittleren Verweilzeiten von 0,1 bis 30 Minuten gelöst, das dadurch gekennzeichnet ist, daß man das Vermahlen bei Temperaturen von 0 bis 60°C vornimmt.

Das mit Hilfe des erfindungsgemäßen Verfahrens zu zerkleinernde hochmolekulare Polyisobuten ist u.a. durch kationische Polymerisation von Isobuten mit Bortrifluorid als Initiator erhältlich. Es weist Molmassen (Viskositätsmittel) von 5.000.000 bis 12.000.000, vorzugsweise von 5.000.000 bis 10.000.000 und durchschnittlichen Korngrößen von 5 bis 20 mm, insbesondere von 5 bis 15 mm, auf. Das dabei verwendete Polyisobuten kann außerdem noch die in der Kunststofftechnik üblicherweise eingesetzten Zusatzstoffe wie Stabilisatoren, Füllstoffe, Gleitmittel, Nukleierungsmittel oder Weichmacher enthalten.

Erfindungsgemäß wird die Vermahlung bei Temperaturen von 0 bis 60°C, insbesondere bei Temperaturen von 10 bis 50°C vorgenommen. Diese Temperaturwerte sind erheblich leichter wie die nach dem Stand der Technik bekannten Verarbeitungstemperaturen von -70 bis -190°C einzustellen, so daß die Vermahlung in den üblichen zur Kunststoffverarbeitung eingesetzten Apparaturen erfolgen kann. Als solche kommen insbesondere Mühlen, Trommelmischer, Schnecken- oder Scheibenextruder, Walzwerke oder Kneter in Betracht, wobei sich Mühlen besonders gut eignen. Die Vermahlung erfolgt dabei bei Drücken von 0,05 bis 100 bar, insbesondere bei Drücken von 0,1 bis 50 bar und mittleren Verweilzeiten von 0,1 bis 30 Minuten, insbesondere von 0,1 bis 15 Minuten.

In einer bevorzugten Ausführungsform des erfindungsgemäßen Verfahrens wird das Polyisobuten vor der eigentlichen Feinvermahlung einer Vorzerkleinerung unterworfen, wobei diesem dort 0,5 bis 5 Gew.%, insbesondere 1 bis 4 Gew.% Tricalciumphosphat zugegeben wird, um eine Agglomeration der zerkleinerten Teilchen zu verhindern. In der sich daran anschließenden Feinvermahlung wird dem Polyisobuten nochmals 5 bis 30 Gew.%, insbesondere 5 bis 25 Gew.% Tricalciumphosphat zugegeben, um auch bei der Feinvermahlung eine Agglomeration der Polymerpartikel zu vermeiden. Dabei wird in der Regel das Polyisobuten so lange vermahlen, bis dessen durchschnittlicher Korndurchmesser weniger als 1 mm beträgt.

Das erfindungsgemäße Verfahren ermöglicht die Zerkleinerung von hochmolekularem Polyisobuten unter den, in der Kunststofftechnik für Vermahlungen gebräuchlichen Temperaturbedingungen, so daß die Verwendung von aufwendigen Kühl- und Isoliervorrichtungen überflüssig wird. Das dabei erhältliche Polyisobuten weist einen deutlich verringerten Korndurchmesser und damit eine gute Löslichkeit in Mineralölen und flüssigen Kohlenwasserstoffen auf. Ein deutlicher Molmassenabbau kann bei dem, mit Hilfe des erfindungsgemäßen Verfahrens zerkleinerten Polyisobuten nicht beobachtet werden. Das erfindungsgemäße Verfahren eignet sich insbesondere zur Verbesserung der Fließeigenschaften von Rohöl, da es dessen Strömungswiderstand deutlich senkt.

2

Beispiel 1

In einer Labormühle der Firma Janke und Kunkel/Labortechnik mit einem Durchmesser von 5 cm und einem Füllvolumen von 15 cm$^3$ wurde bei 10 Umdrehungen pro Sekunde mit Hilfe eines rotierenden Messers 12 g eines Polyisobutens mit einer durchschnittlichen Korngröße von 10 mm und einer durchschnittlichen Molmasse von 6.900.000 zerkleinert. Die Bestimmung der Molmasse (Viskositätsmittel) erfolgte dabei nach den in der Kunststofftechnik für Viskositätsmittel üblichen Methoden, wie sie beispielsweise in "Hans-Georg Elias, Makromoleküle, Verlag Hüthig & Wepf, Basel-Heidelberg-New York, 4. Auflage (1981)" auf den Seiten 297-317 beschrieben sind. Die Vermahlung wurde bei einem Druck von 0,2 bar, einer Temperatur von 40°C und einer mittleren Verweilzeit des Mahlgutes von 5 Minuten durchgeführt.

Man erhielt 12 g eines Polyisobutens in Form eines rieselfähigen Granulats mit einer durchschnittlichen Molmasse (Viskositätsmittel) von 5.900.000 und folgender Korngrößenverteilung:

Kornverteilung in Gew.%

| < 0,1 mm | < 0,2 mm | < 0,3 mm |
|----------|----------|----------|
| 18 %     | 51 %     | 31 %     |

Beispiel 2

In einem Vorzerkleinerungsschritt wurden 1,6 Tonnen eines Polyisobutens mit einer durchschnittlichen Molmasse (Viskositätsmittel) von 6.900.000 und einem durchschnittlichen Korndurchmesser von 10 mm mit einer Mühle der Firma Pallmann ("PS 4-5") mit einer Durchsatzleistung von 400 kg/h bei 11 Umdrehungen pro Sekunde, einem Druck von 0,25 bar, einer Temperatur von 30°C und einer mittleren Verweilzeit von 7,5 Minuten auf eine durchschnittliche Korngröße von 2 bis 6 mm zerkleinert. Um eine Agglomeration der zerkleinerten Teilchen zu vermeiden, wurden dem Polyisobuten vorher 2 Gew.% Tricalciumphosphat hinzugefügt.

In der sich daran anschließenden Feinvermahlung wurde das aus dem Vorzerkleinerungsschritt erhaltene Polyisobuten in einer weiteren Mühle der Firma Pallmann ("PKM 600") mit einer Durchsatzleistung von 250 kg/h, bei 58 Umdrehungen pro Sekunde, einem Druck von 0,63 bar, einer Temperatur von 40°C und einer mittleren Verweilzeit von 4,8 Minuten weiter zerkleinert. Um auch hier eine Agglomeration der Polymerpartikel zu vermeiden, wurde dem Aufgabegut vor der Vermahlung 4 Gew.% Tricalciumphosphat und dem Mühlenaustrag anschließend nochmals 15 Gew.% Tricalciumphosphat hinzugefügt.

Man erhielt 1,9 Tonnen eines rieselfähigen Polyisobutens mit einer durchschnittlichen Molmasse (Viskositätsmittel) von 5.900.000 und folgender Korngrößenverteilung:

Korngrößenverteilung in Gew.%

| < 0,2 mm | < 0,3 mm | < 0,5 mm | < 0,8 mm | < 1,0 mm | < 1,5 mm |
|----------|----------|----------|----------|----------|----------|
| 7 %      | 4 %      | 18 %     | 37 %     | 19 %     | 15 %     |

Beispiel 3

In einem Versuchsrohr mit einer Länge von 1 m und einem Durchmesser von 3 mm wurden bei turbulenter Rohrströmung (Reynoldszahl Re = 20000) die widerstandsverminderten Eigenschaften des aus den Beispielen 1 und 2 erhaltenen Polyisobutens mit Hilfe einer kontinuierlichen Druck/Durchsatz-Messung bestimmt. Als Fließmittel wurde dabei Petroleum verwendet. Das Polyisobuten wurde dem Petroleum vor dem Eintritt in das Versuchsrohr hinzugefügt.

Die dabei erhaltenen Ergebnisse sind der nachstehenden Tabelle zu entnehmen.

Tabelle

| Konzentration des Polyisobutens im Petroleum [in ppm] | Verringerung des Strömungswiderstandes [in %] |
|---|---|
| 3 | 15 |
| 5 | 26 |
| 10 | 33 |

**Patentansprüche**

1. Verfahren zum Zerkleinern von Polyisobuten mit Molmassen von 5.000.000 bis 12.000.000 durch Vermahlen bei Drücken von 0,1 bis 100 bar und mittleren Verweilzeiten von 0,1 bis 30 Minuten, dadurch gekennzeichnet, daß man das Vermahlen bei Temperaturen von 0 bis 60°C vornimmt.

2. Verfahren nach Anspruch 1, dadurch gekennzeichnet, daß man das Vermahlen bei Temperaturen von 10 bis 50°C vornimmt.

3. Verfahren nach den Ansprüchen 1 oder 2, dadurch gekennzeichnet, daß man dieses zum Zerkleinern von Polyisobuten mit Molmassen von 5.000.000 bis 10.000.000 anwendet.